# EUROPÄISCHE PATENTSCHRIFT

(11) **EP 3 342 508 B1**
(45) Veröffentlichungstag und Bekanntmachung des Hinweises auf die Patenterteilung: **28.08.2019**
(21) Anmeldenummer: 17206782.9
(22) Anmeldetag: 12.12.2017
(51) Int. Cl.: B29C 64/153, B22F 3/105, B33Y 30/00

(54) **VORRICHTUNG ZUM GENERATIVEN HERSTELLEN VON WERKSTÜCKEN**
DEVICE FOR THE GENERATIVE PRODUCTION OF WORKPIECES
DISPOSITIF DE FABRICATION GÉNÉRATIVE DE PIÈCES À USINER

(30) Priorität: 23.12.2016 DE 102016226150
(43) Veröffentlichungstag der Anmeldung: 04.07.2018
(73) Patentinhaber: Robert Bosch GmbH, 70442 Stuttgart (DE)
(72) Erfinder: Letsch, Andreas, 70565 Stuttgart (DE); Hlavac, Marcus, 70327 Stuttgart-Untertuerkheim (DE); Willeck, Hannes, 71272 Renningen (DE); Ilin, Alexander, 71642 Ludwigsburg (DE); Echaniz, Aitor, 70197 Stuttgart (DE); Loeber, Lukas, 71638 Ludwigsburg (DE); Schoepf, Martin, 70499 Stuttgart (DE); Dittmaier, Ulrich, 97225 Zellingen (DE); Kiedrowski, Thomas, 74372 Sersheim (DE)

(56) Entgegenhaltungen:
- WO-A1-2010/045951
- WO-A1-2017/084955
- DE-A1- 10 235 434
- DE-A1-102011 008 774
- DE-A1-102013 103 096
- DE-A1-102014 010 412
- US-A1- 2016 193 695

## Beschreibung

### Stand der Technik

Die Erfindung betrifft eine Vorrichtung zum generativen Herstellen von Werkstücken nach dem Oberbegriff des Anspruchs 1.

Aus der DE 10 2011 008 774 A1 sowie der DE 10 2014 010 412 A1 sind jeweils Vorrichtungen zum generativen Herstellen von Werkstücken mit den Merkmalen des Oberbegriffs des Anspruchs 1 bekannt, die sich dadurch auszeichnen, dass mittels mehrerer Bearbeitungsstrahlen Werkstücke in einem einzigen Aufbaubehälter erzeugt werden.

Eine weitere Vorrichtung ist aus der DE 10 2013 210 242 A1 bekannt. Mittels der bekannten Vorrichtung lassen sich beispielsweise zur Herstellung von Prototypen dienende Werkstücke durch selektives Aufschmelzen und anschließendes Erstarren von Pulvermaterial mittels einer Laserstrahleinrichtung erzeugen. Die bekannte Vorrichtung weist eine in einer senkrechten Achse drehbar gelagerte Trägereinrichtung auf, die einen topfförmigen Aufbaubehälter für das Material bzw. Pulver ausbildet. Ein der Ausbildung einer Pulverschicht in dem Aufbaubehälter dienender Pulververteiler mit integriertem Pulvervorratsbehälter erstreckt sich in radialer Richtung von der senkrechten (Dreh-) Achse der Trägereinrichtung und ist gegenüber der Trägereinrichtung ortsfest, jedoch höhenverstellbar zur Trägereinrichtung angeordnet. Dadurch lässt sich eine gewünschte Dicke der jeweils obersten Pulverschicht einstellen. Diese Pulverschicht wird bei der Drehung des Aufbaubehälters um seine Drehachse auf die zuletzt eingebrachte Pulverschicht bzw. auf das Material des Werkstücks durch den Pulververteiler aufgebracht und gelangt bei der weiteren Drehung des Aufbaubehälters in den Arbeitsbereich eines Laserstrahls, um dort zur Ausbildung des Werkstücks selektiv aufgeschmolzen zu werden.

Die zuletzt genannte Vorrichtung ermöglicht es somit, während einer vollständigen Drehung des Aufbaubehälters um seine Drehachse die in dem Aufbaubehälter durch die Pulververteiler zuletzt eingebrachte oberste Schicht aufzuschmelzen. Als nachteilhaft wird erachtet, dass die Leistung der bekannten Vorrichtung insofern relativ gering ist, da zu einem Zeitpunkt nur ein einziges, innerhalb des Arbeitsbereichs des Laserstrahls angeordnetes Werkstücks gefertigt werden kann, und dass es zum Aufbringen der jeweils nächsten Pulverschicht erforderlich ist, den Aufbaubehälter um eine volle Umdrehung um seine Drehachse zu drehen.

Weiterhin ist es aus der EP 2 875 897 A1 bekannt, im Bereich einer Prozesskammer zum generativen Herstellen eines Werkstücks gleichzeitig zwei Bearbeitungsstrahlen in Form von Laserstrahlen zu verwenden, deren Bearbeitungsbereiche im Bereich des Pulverbetts aneinander anschließen können oder teilweise überlappen. Dadurch lässt sich die Prozesszeit zum Aufschmelzen einer Pulverschicht verringern, so dass sich eine vergrößerte Leistung ergibt.

Zusätzlich wird erwähnt, dass sowohl die Vorrichtung gemäß der DE 10 2013 210 242 A1, als auch die Vorrichtung gemäß der EP 2 875 897 A1 jeweils einen einzigen Aufbaubehälter umfassen, so dass die bekannten Vorrichtungen auf das Herstellen von Werkstücken beschränkt sind, die aus einem einzigen Material bestehen.

### Offenbarung der Erfindung

Die erfindungsgemäße Vorrichtung zum generativen Herstellen von Werkstücken mit den Merkmalen des Anspruchs 1 hat den Vorteil, dass sie die Herstellung qualitativ besonders hochwertiger Werkstücke ermöglicht.

Der Erfindung liegt die Idee zugrunde, dass der Einrichtung zur Erzeugung der wenigstens zwei Bearbeitungsstrahlen eine Schutzgaszuführ- und eine Schutzgasabführeinrichtung zugeordnet ist, die in Bezug zur Drehrichtung des Aufbaubehälters vor und hinter einem Einwirkbereich der wenigstens zwei Bearbeitungsstrahlen angeordnet sind. Die lokale Schutzgaszuführung und - absaugung sorgt für den lokalen, sofortigen und effizienten Abtransport von Rauchgas und Spritzern, die während des Schmelzprozesses des Pulvers entstehen, und die sich ansonsten qualitätsmindernd auf den Prozess und die Werkstücke auswirken.

Vorteilhafte Weiterbildungen der erfindungsgemäßen Vorrichtung zum generativen Herstellen von Werkstücken sind in den Unteransprüchen aufgeführt.

Eine ganz besonders große Leistung lässt sich erzielen, wenn wenigstens zwei Aufbaubehälter mit wenigstens zwei Pulververteilern sowie mehrere, jeweils einem Aufbaubehälter zugeordnete Einrichtungen zur Erzeugung von wenigstens zwei Bearbeitungsstrahlen vorgesehen sind, wobei die Trägereinrichtung in eine senkrecht angeordneten Achse drehbar gelagert ist. Mit anderen Worten gesagt bedeutet dies, dass beim Umlauf einer die Aufbaubehälter aufnehmenden Trägereinrichtung um die Drehachse um 360° jeweils wenigstens Werkstücke im Bereich zweier Aufbaubehälter bearbeitet werden können.

Obwohl es grundsätzlich möglich ist, dass die Anzahl der Pulververteiler sich von der Anzahl der Aufbaubehälter unterscheidet (beispielsweise ist es denkbar, dass die Anzahl der Aufbaubehälter doppelt so groß ist wie die Anzahl der Pulververteiler), ist es besonders vorteilhaft, wenn die Anzahl der Pulververteiler gleich groß ist wie die Anzahl der Aufbaubehälter, und wenn die Pulververteiler und die Aufbaubehälter in jeweils gleichgroßen Winkelabständen zueinander angeordnet sind, wobei die Trägereinrichtung in eine senkrecht angeordneten Achse drehbar gelagert ist. Dadurch lässt sich insbesondere bei einem kontinuierlichen Betrieb der Vorrichtung, d.h. bei einem kontinuierlichen Vorbeibewegen des Pulverbetts im Bearbeitungsbereich der Bearbeitungsstrahlen ein gleichmäßiger Aufbau bzw. eine gleichmäßige Leistung der Vorrichtung erzielen. Insbesondere wird dadurch die Verwendung eines relativ einfachen Antriebs zum Drehen bzw. Bewegen der Aufbaubehälter um die Achse sowie die Verwendung von gegenüber dem Aufbaubehälter starr angeordneten Pulververteilern ermöglicht.

In konstruktiv bevorzugter Ausgestaltung, die einen besonders kompakten Aufbau der Vorrichtung ermöglicht, ist es vorgesehen, dass jeweils ein Pulververteiler und eine Einrichtung zur Erzeugung von wenigstens zwei Bearbeitungsstrahlen eine gemeinsame Baueinheit ausbilden, die gegenüber dem Aufbaubehälter in Bezug zur Drehachse des Aufbaubehälters starr angeordnet ist.

Eine weitere Leistungssteigerung einer soweit beschriebenen Vorrichtung lässt sich erzielen, wenn die zuletzt beschriebene Baueinheit, bestehend aus dem Pulververteiler und der Einrichtung zur Erzeugung von wenigstens zwei Bearbeitungsstrahlen, zusätzlich eine Heizeinrichtung aufweist, die in Bezug zur Drehrichtung des Aufbaubehälters zwischen dem Pulververteiler und der Einrichtung zur Erzeugung von wenigstens zwei Bearbeitungsstrahlen angeordnet ist. Eine derartige Ausbildung ermöglicht es insbesondere, die jeweils oberste aufzuschmelzende Pulverschicht vorzuheizen, beispielsweise auf eine Temperatur, die 95% der Schmelztemperatur des Materials des Pulvers entspricht. Dadurch werden im Bereich der wenigstens zwei Bearbeitungsstrahlen sehr kurze benötigte Prozeßzeiten ermöglicht, da durch die Bearbeitungsstrahlen das vorgewärmte Material des Pulverbetts nur um einen relativ geringen Temperaturbetrag erwärmt werden muss, bis dieses aufschmilzt.

Wie bereits oben erläutert, ist es in einer Variante der erfindungsgemäßen Vorrichtung vorgesehen, dass ein Antrieb zum kontinuierlichen Drehen des bzw. der Aufbaubehälter um die Achse dient. Eine derartige Ausgestaltung hat zur Folge, dass während des Drehens des Aufbaubehälters unterhalb der Bearbeitungsstrahlen die Bearbeitungsstrahlen durch entsprechende Spiegeleinrichtungen oder ähnliches dem Aufbaubehälter nachgeführt werden müssen. Um dies zu vermeiden, kann es jedoch auch alternativ vorgesehen sein, dass ein Antrieb zum taktweisen Drehen des bzw. der Aufbaubehälter um die Achse vorgesehen ist. Ein derartiger Antrieb bewirkt, dass während einer Stillstandsphase keine Relativbewegung der Bearbeitungsstrahlen zum Pulverbett erfolgen muss, um die Relativbewegung des Aufbaubehälters zu den Bearbeitungsstrahlen auszugleichen.

Die wenigstens zwei Bearbeitungsstrahlen, insbesondere Laserstrahlen, können entweder durch separate Einrichtungen erzeugt werden, oder aber durch eine gemeinsame Einrichtung, bei der durch entsprechende optische Einrichtungen Bearbeitungsstrahlen ausgekoppelt werden, wie dies aus dem Stand der Technik an sich bekannt ist. Um eine effektive Bearbeitung der jeweils obersten Pulverschicht durch die Bearbeitungsstrahlen zu erzielen, bei der zum einen das Material nur einmal durch einen Bearbeitungsstrahl aufgeschmolzen wird, und bei der gleichzeitig sich der Querschnitt des auszubildenden Bauteils möglichst homogen erwärmt bzw. aufschmelzt, ist es darüber von Vorteil, wenn jedem Bearbeitungsstrahl eine Strahlablenkeinrichtung zur Erzeugung eines Bearbeitungsbereichs der obersten Pulverschicht zugeordnet ist, und wenn die Bearbeitungsbereiche der Bearbeitungsstrahlen bzw. wenn die Strahlablenkeinrichtungen entlang wenigstens einer Geraden angeordnet sind.

Die Anordnung der Bearbeitungsbereiche entlang wenigstens einer Geraden sorgt insbesondere dafür, dass beim Relativbewegen zwischen dem Pulverbett und den Bearbeitungsbereichen der auszubildende Querschnitt eines Werkstücks vollständig durch aufgeschmolzenes Material gebildet werden kann.

Eine optimale Leistung bzw. Ausbildung der Werkstücke wird darüber hinaus erzielt, wenn die Anordnung der Bearbeitungsbereiche bzw. Strahlablenkeinrichtungen dem Querschnitt des auszubildenden Werkstücks angepasst ist, und wenn die Bearbeitungsbereiche der Bearbeitungsstrahlen unmittelbar aneinander anschließen oder in teilweiser Überdeckung zueinander angeordnet sind. Mit anderen Worten gesagt bedeutet dies, dass die Anordnung der Bearbeitungsbereiche derart ist, dass diese den Querschnitt des auszubildenden Bauteils lückenfrei abdecken bzw. während einer Relativbewegung zwischen dem Pulverbett und den Bearbeitungsstrahlen eine lückenfreie Bearbeitung und ein lückenfreies Aufschmelzen der obersten Pulverschicht im Bereich des auszubildenden Werkstücks ermöglicht.

Hierzu kann es insbesondere auch vorgesehen sein, dass bei einer Anordnung der Bearbeitungsbereiche der Bearbeitungsstrahlen bzw. der Strahlablenkeinrichtungen entlang mehrerer Geraden die Geraden parallel zueinander angeordnet sind.

Eine weitere Ausgestaltung der Erfindung sieht vor, diese in sogenannter Linearbauweise auszubilden. Dies bedeutet, dass die Trägereinrichtung und die Einrichtung zur Erzeugung von wenigstens zwei Bearbeitungsstrahlen linear beweglich zueinander angeordnet sind. Eine derartige Ausgestaltung umfasst drei mögliche Ausführungen: In einer ersten Ausführung ist die Trägereinrichtung ortsfest angeordnet und die Einrichtung zur Erzeugung von wenigstens zwei Bearbeitungsstrahlen linear beweglich zur Trägereinrichtung angeordnet. In einer zweiten Ausführung ist die Trägereinrichtung linear beweglich zur ortsfest angeordneten Einrichtung zur Erzeugung von wenigstens zwei Bearbeitungsstrahlen angeordnet. Zuletzt sind in einer dritten Ausführung sowohl die Trägereinrichtung als auch die ist Einrichtung zur Erzeugung von wenigstens zwei Bearbeitungsstrahlen jeweils beweglich angeordnet, um eine relative Linearbewegung zueinander zu ermöglichen.

Um auch bei einer derartigen Ausbildung eine großfläche Einwirkung der Bearbeitungsstrahlen, auch ohne bewegliche Spiegeleinrichtungen bzw. optische Elemente zu ermöglichen, sieht es eine bevorzugte Variante vor, dass die Einrichtung zur Erzeugung von wenigstens zwei Bearbeitungsstrahlen zusätzlich senkrecht zur Bewegungsrichtung der Baueinheit beweglich angeordnet ist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen stark vereinfachten Querschnitt im Bereich einer Vorrichtung zum generativen Herstellen von Werkstücken,
- Fig. 2: einen Längsschnitt durch den Bereich der Vorrichtung gemäß Fig. 1 im Bereich einer einen Pulverbeschichter, eine Heizeinrichtung und eine Einrichtung zur Erzeugung mehrerer Bearbeitungsstrahlen aufweisenden Baueinheit,
- Fig. 3 bis Fig. 5: vereinfachte Querschnitte im Bereich von unterschiedlich ausgestalteten Einrichtungen zur Erzeugung mehrerer Bearbeitungsstrahlen, wie sie bei einer Vorrichtung gemäß der Fig. 1 verwendet werden können,
- Fig. 6: eine gegenüber den Fig. 1 bis 5 konstruktiv modifizierte Vorrichtung zum generativen Herstellen von Werkstücken in einer perspektivischen Teilansicht,
- Fig. 7: eine perspektivische Schnittdarstellung im Bereich einer Baueinheit der Vorrichtung gemäß Fig. 6 zur Verdeutlichung der Schutzgasführung,
- Fig. 8: eine perspektivische Ansicht auf die Baueinheit gemäß Fig. 7 zur Verdeutlichung der Bewegbarkeit von Bearbeitungsstrahlen und
- Fig. 9: einen Längsschnitt im Bereich einer Laserstrahloptik mit unterschiedlichen Schutzgasführungen.

Gleiche Bauteile bzw. Bauteile mit gleicher Funktion sind in den Figuren mit den gleichen Bezugsziffern versehen.

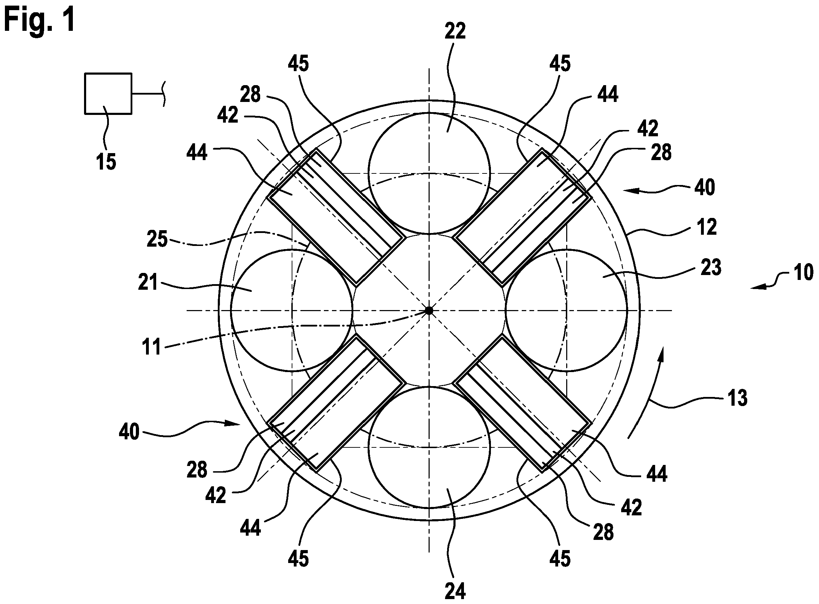

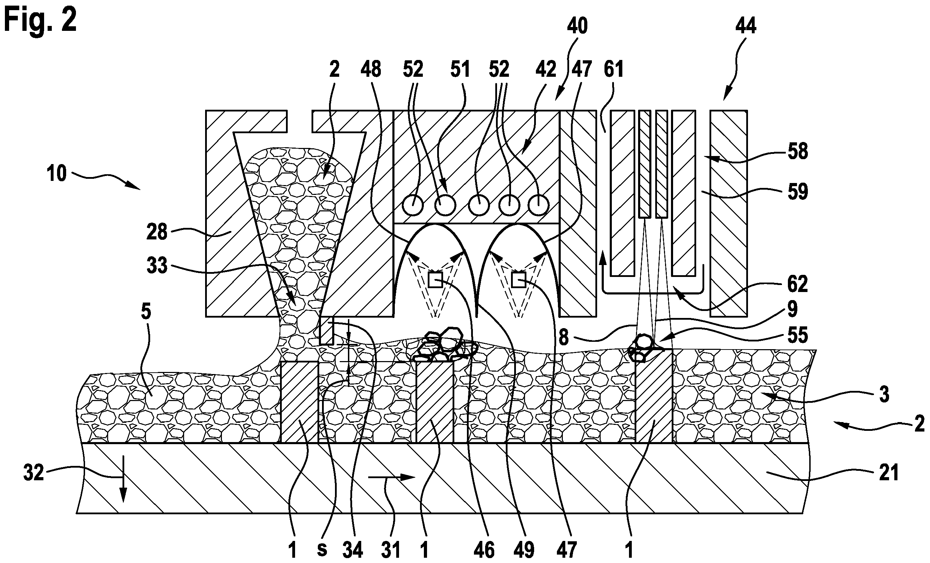

Die in den Fig. 1 und 2 dargestellte Vorrichtung 10 dient zum generativen Herstellen von lediglich in der Fig. 2 erkennbaren Werkstücken 1. Die Vorrichtung 10 weist eine in einer senkrechten Achse 11 drehbar gelagerte Trägereinrichtung 12 auf. Im dargestellten Ausführungsbeispiel ist die Trägereinrichtung 12 im Gegenuhrzeigersinn in Richtung des Pfeils 13 drehbar. Der Antrieb der Trägereinrichtung 12 um die Achse 11 erfolgt mittels eines Antriebs 15, der dazu ausgebildet ist, die Trägereinrichtung 12 entweder kontinuierlich, d.h. mit konstanter Winkelgeschwindigkeit, oder aber schrittweise zu drehen, derart, dass zwischen den einzelnen Bewegungsschritten die Trägereinrichtung 12 stillsteht.

Die im Ausführungsbeispiel im Querschnitt einen runden Querschnitt aufweisende Trägereinrichtung 12 dient der Aufnahme bzw. Anordnung von ebenfalls rein beispielhaft vier, jeweils einen runden Querschnitt aufweisenden Aufbaubehältern 21 bis 24. Die Mittelpunkte der Aufbaubehälter 21 bis 24 sind auf einem gemeinsamen Teilkreisdurchmesser 25 in gleichgroßen Winkelabständen, d.h. um jeweils 90° versetzt zueinander angeordnet. Innerhalb der Aufbaubehälter 21 bis 24 befindet sich pulverförmiges Material 2 (Fig. 2), das dazu dient, die Werkstücke 1 auszubilden. Hierzu bildet das Material 2 innerhalb des jeweiligen Aufbaubehälters 21 bis 24 jeweils ein Pulverbett 3 aus, bei dem zum Herstellen einer obersten Schicht der Werkstücke 1 eine obere Pulverschicht 5 erzeugt und selektiv aufgeschmolzen wird. Die obere Pulverschicht 5 weist beispielsweise, und nicht einschränkend, eine Schichtdicke s zwischen 20µm und 200µm auf.

Das Erzeugen bzw. Aufbringen der jeweils obersten Pulverschicht 5 erfolgt durch Pulververteiler 28, die in Draufsicht (Fig. 1) in etwa rechteckförmig ausgebildet sind und sich in Bezug zur Drehachse 11 radial erstrecken, derart, dass diese mit den Aufbaubehältern 21 bis 24 ausgerichtet sind und eine Länge aufweisen, dass bei einer Relativbewegung zwischen den Pulververteilern 28 und den Aufbaubehältern 21 bis 24 der gesamte Querschnitt der Aufbaubehälter 21 bis 24 in den Wirkbereich der Pulververteiler 28 gelangt. Hierzu ist es beispielhaft vorgesehen, dass vier Pulververteiler 28 vorgesehen sind, die in gleichgroßen Winkelabständen, d.h. um jeweils 90° zueinander versetzt um die Achse 11 angeordnet sind. Zum Ausbilden einer jeweils obersten Pulverschicht 5 sind darüber hinaus die üblicherweise ortsfest in Bezug zur Trägereinrichtung 12 angeordneten Pulververteiler 28 in einer Richtung achsparallel zur Achse 11 verstellbar, indem beispielsweise die Trägereinrichtung 12 zum Ausbilden einer jeweils obersten Pulverschicht 5 um die entsprechende Schichtdicke relativ zu den Pulververteilern 28 absenkbar ist.

In der Fig. 2 ist erkennbar, dass zum einen die Aufbaubehälter 21 bis 24, im dargestellten Ausführungsbeispiel der Aufbaubehälter 21, in Richtung der Pfeils 31 relativ zum Pulververteiler 28 horizontal bewegbar ist, um die jeweils oberste Pulverschicht 5 in dem Pulverbett 3 zu dosieren, und dass zum anderen der Aufbaubehälter 21 in Richtung des Pfeils 32 relativ zum Pulververteiler 28 vertikal beweglich ist. Um die dem Pulververteiler 28 zugewandte Oberseite des Pulverbetts 3 einzuebnen, und um darüber hinaus die gewünschte Schichtdicke s einzustellen, weist ein Austrittsbereich 33 für das Material 2 aus dem Pulververteiler 28 ein Rakelelement 34 auf, das das Material 2 bei der Relativbewegung zwischen dem Aufbaubehälter 21 und dem Pulververteiler 28 bei einer Bewegung des Aufbaubehälters 21 in Richtung des Pfeils 31 einebnet.

Der leistenförmige Pulververteiler 28 ist Bestandteil einer Baueinheit 40, die zusätzlich zu einem Pulverteiler 28 jeweils eine (Vor-)Heizeinrichtung 42 und eine Strahlerzeugereinheit 44 aufweist. Sowohl die Heizeinrichtung 42, als auch die Strahlerzeugereinheit 44 sind im dargestellten Ausführungsbeispiel, wie insbesondere anhand der Fig. 1 erkennbar ist, ebenfalls im Querschnitt jeweils länglich bzw. rechteckförmig ausgebildet und weisen ebenfalls rein beispielhaft dieselbe Baulänge auf wie die Pulververteiler 28. Die innerhalb eines in der Fig. 1 erkennbaren Gehäuses 45 der Baueinheit 40 angeordnete Heizeinrichtung 42, die ebenso wie die Strahlerzeugereinheit 44 in Bezug zur Achse 11 radial ausgerichtet sind, ist zwischen dem Pulververteiler 28 und der Strahlerzeugereinheit 44 angeordnet. Weiterhin ist die Größe des Gehäuses 45 beispielhaft derart ausgebildet, dass das Gehäuse 45 in der in der Fig. 1 dargestellten Position jeweils zwischen zwei Aufbaubehältern 21 bis 24 angeordnet ist, d.h. diese nicht überdeckt, sondern mit geringem Abstand zu dem jeweiligen Aufbaubehälter 21 bis 24 angeordnet ist.

Die Heizeinrichtung 42 weist beispielhaft zwei Infrarotstrahlungsquellen 46, 47 auf, deren Abstrahlrichtung in eine vom Pulverbett 3 abgewandte Richtung weist. Die Infrarotstrahlungsquellen 46, 47 wirken jeweils mit einem im Querschnitt parabolisch geformten Spiegel 48, 49 zusammen, der dazu dient, die von den Infrarotstrahlungsquellen 46, 47 erzeugte Wärmestrahlung möglichst homogen auf die Oberseite des Pulverbetts 3 zu reflektieren. Um insbesondere eine thermische Überlastung der Heizeinrichtung 42 zu vermeiden, weist die Heizeinrichtung 42 darüber hinaus eine Kühleinrichtung 51 auf, die beispielhaft mehrere Kühlkanäle 52 hat, die mit einem Kühlmedium durchströmbar sind.

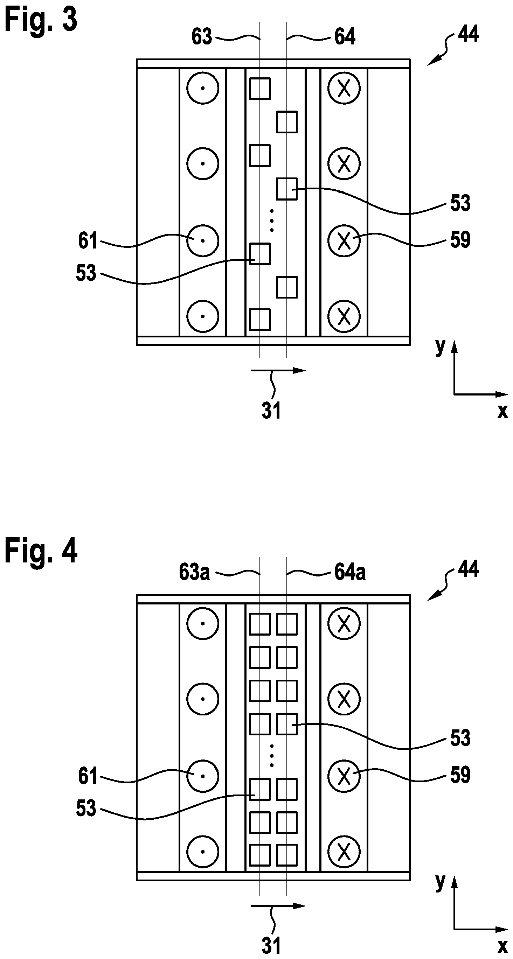

Die Strahlerzeugereinheit 44 ist dazu ausgebildet, gleichzeitig mehrere Bearbeitungsstrahlen 8, 9 zu erzeugen. Insbesondere handelt es sich bei den Bearbeitungsstrahlen 8, 9 um Laserstrahlen. Hierzu weist die Strahlerzeugereinheit 44 eine oder mehrere Laserstrahlquellen auf, die dazu ausgebildet ist/sind, die Bearbeitungsstrahlen 8, 9 zu erzeugen und in Richtung des Pulverbetts 3 zu leiten. Eine derartige Einrichtung wird auch als Multiarray-Belichter bezeichnet. Insbesondere ist jedem Bearbeitungsstrahl 8, 9 darüber hinaus eine verstellbare Spiegeleinrichtung 53 (siehe Fig. 3 bis 5) als Strahlablenkeinrichtung zugeordnet, die dazu ausgebildet ist, den im Wesentlichen senkrecht auf die Oberfläche des Pulverbetts 3 auftretenden Bearbeitungsstrahl 8, 9 bewegen zu können, so dass diese jeweils einen Bearbeitungsbereich 55 ausbilden. Wesentlich ist, dass mittels der Bearbeitungsstrahlen 8, 9 eine gleichzeitige bzw. simultane Bearbeitung der jeweils obersten Pulverschicht 5 erfolgen kann. Diese Bearbeitung besteht in einem Aufschmelzen des Materials 2 im Bereich der obersten Pulverschicht 5, wobei durch die Heizeinrichtung 42 das Material 2 vorab beispielsweise auf eine Temperatur erwärmt wurde, die 95% der Schmelztemperatur des Materials 2 entspricht.

Der Strahlerzeugereinheit 44 ist darüber hinaus eine Schutzgaseinrichtung 58 zugeordnet, die einen Schutzgaszuführbereich 59 und einen Schutzgasabführbereich 61 im Bereich eines Austrittsbereichs 62 für die Bearbeitungsstrahlen 8, 9 aufweist. Die Schutzgaseinrichtung 58 dient dem Abtransport von Rauchgas oder Spritzern, die während des Schmelzprozesses des Materials 2 durch die Bearbeitungsstrahlen 8, 9 entsteht, wozu das entsprechende Schutzgas über die Schutzgaszuführung 59 in Wirkverbindung mit dem Bearbeitungsbereich 55 zu den Bearbeitungsstrahlen 8, 9 gelangt und über die Schutzgasabführung 61 abgesaugt wird.

Die Funktionsweise der Vorrichtung 10 wird mit Bezug auf die Fig. 1 und 2 wie folgt erläutert: Beim Vorbeibewegen des jeweiligen Aufbaubehälters 21 bis 24 unterhalb einer Baueinheit 40 wird mittels des jeweiligen Pulververteilers 28 Material 2 an das Pulverbett 5 abgegeben, welches mittels des Rakelelementes 34 eingeebnet wird, um jeweils eine oberste Pulverschicht 5 mit voreingestellter Schichtdicke s zu erzeugen. Anschließend gelangt die oberste Pulverschicht 5 in den Wirkbereich der Heizeinrichtung 42 der Baueinheit 40, wo das Material 2 vorgewärmt wird. Danach gelangt das vorgewärmte Material 2 unmittelbar in den Bereich der mehreren Bearbeitungsstrahlen 8, 9, die über die entsprechenden Bearbeitungsbereiche 55 ein selektives Aufschmelzen des Materials 2 bewirken, um den Querschnitt des jeweiligen Werkstücks 1 auszubilden. Anschließend erstarrt das Material 2, bevor es beispielsweise in den Bereich der in Drehrichtung der Trägereinrichtung 12 nächsten Baueinheit 40 gelangt, wo wiederum eine oberste Pulverschicht 5 in dem Aufbaubehälter 21 bis 24 erzeugt wird. Vorab findet jedoch eine Relativverstellung der Baueinheit 40 zu der Trägereinrichtung 12 statt, d.h., dass sich der gegenseitige Abstand um jeweils die Schichtdicke s der nächsten aufzubauenden Pulverschicht 5 vergrößert.

Bei der Herstellung von Werkstücken 1 aus einem einzigen Material 2 ist es somit möglicht, bei einer vollständigen Drehung der Trägereinrichtung 12 beim Vorhandensein von vier Aufbaubehältern 21 bis 24 und vier Baueinheiten 40 vier oberste Pulverschichten 5 zu bearbeiten bzw. das Werkstück 1 um die entsprechenden Schichthöhen auszubilden. Es ist jedoch auch denkbar, dass in den Pulverteilern 28 unterschiedliche Materialien 2 gespeichert bzw. bevorratet sind. Je nach Bevorratung der unterschiedlichen Materialien 2 in den Pulververteilern 28 kann es ggf. erforderlich sein, den entsprechenden Aufbaubehälter 21 bis 24 an einer oberhalb angeordneten Baueinheit 40 vorbeizubewegen, ohne dass eine Bearbeitung bzw. ein Aufschmelzen von Material 2 erfolgt.

Wie bereits erläutert, weist die Strahlerzeugereinheit 44 wenigstens zwei Bearbeitungsstrahlen 8, 9 bzw. Spiegeleinrichtungen 53 auf. In den Fig. 3 bis 5 sind unterschiedliche Anordnungen mit mehr als zwei Bearbeitungsstrahlen 8, 9 anhand der jeweils einem Bearbeitungsstrahl 8, 9 zugeordneten Spiegeleinrichtung 53 dargestellt. In der Fig. 3 ist erkennbar, dass die Spiegeleinrichtungen 53 entlang zweier Geraden 63, 64 angeordnet sind, die parallel zueinander verlaufen. Weiterhin ist erkennbar, dass die jeweiligen Spiegeleinrichtungen 53 zueinander versetzt angeordnet sind, so dass insbesondere ein von den Bearbeitungsbereichen 55 auf einer Geraden 63 nicht erfasster Bereich des Pulverbetts 3 bzw. der obersten Pulverschicht 5 anschließend in den Bereich von Bearbeitungsbereichen 55 gelangt, die entlang der Geraden 64 angeordnet sind.

In der Fig. 4 sind beispielhaft zwei Reihen (selbstverständlich sind auch mehr als zwei Reihen denkbar) mit Bearbeitungsbereichen 55 von Bearbeitungsstrahlen 8, 9 dargestellt, die entlang zweier Geraden 63a, 64a angeordnet sind. Im Gegensatz zur Darstellung der Fig. 3 sind die Bearbeitungsbereiche 55 bzw. Spiegeleinrichtungen 53 in Richtung der jeweiligen Geraden 63, 64 jedoch nicht seitlich zueinander versetzt angeordnet, d.h., dass bei einer Bewegung des jeweiligen Aufbaubehälters 21 bis 24 in Richtung des Pfeils 31 ein Bereich der jeweils obersten Pulverschicht 5 mehrfach in einen Bearbeitungsbereich 55 geraten kann.

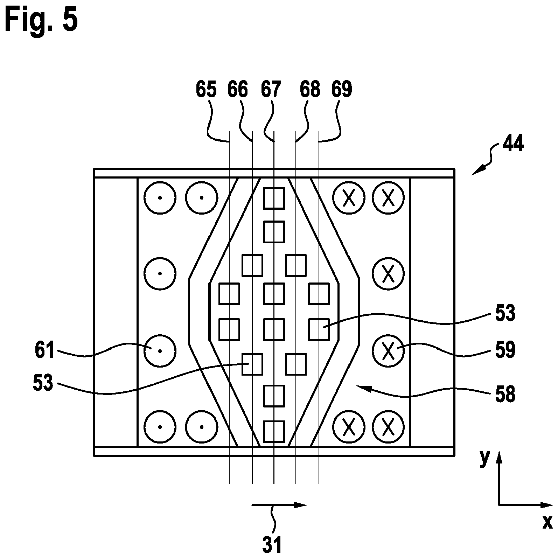

In der Fig. 5 der Fall dargestellt, bei der die Anordnung der Bearbeitungsbereiche 55 bzw. Spiegeleinrichtungen 53 dem Querschnitt eines auszubildenden Werkstücks 1 angepasst ist. Dieses Werkstück 1 weist in einem mittleren Bereich eine größere Breite auf als an seinen Randbereichen. In den Bereichen, in denen das Werkstück 1 seine größte Breite aufweist, sind somit in Bezug zur Bewegungsrichtung der Aufbaubehälter 21 bis 24 in Richtung des Pfeils 31 mehrere Bearbeitungsbereiche 55 bzw. Spiegeleinrichtungen 53 hintereinander angeordnet. Die Anzahl der Spiegeleinrichtungen 53 nimmt in Richtung des Pfeils 32 mit abnehmender Breite des Werkstücks 1 ab. Die Spiegeleinrichtungen 53 sind bei dem in der Fig. 5 dargestellten Ausführungsbeispiel entlang von fünf Geraden 65 bis 69 angeordnet, die parallel zueinander verlaufen.

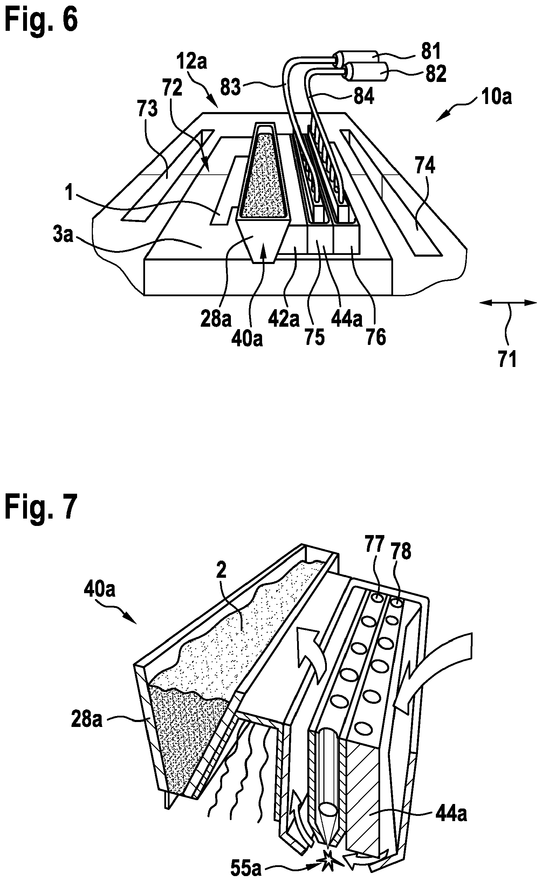

In den Fig. 6 bis 8 ist eine modifizierte Vorrichtung 10a dargestellt, die sich von der Vorrichtung 10 dadurch unterscheidet, dass die Vorrichtung 10a in sogenannter Linearbauweise ausgebildet ist. Hierzu ist die Trägereinrichtung 12a, welche im dargestellten Ausführungsbeispiel in etwa kastenförmig bzw. mit rechteckförmiger Grundfläche ausgebildet ist, mittels eines nicht dargestellten Antriebs in Richtung des Doppelpfeils 71 geradlinig, d.h. linear beweglich angeordnet. Im Bereich der Trägereinrichtung 12a weist diese einen Aufbaubehälter 72 mit rechteckförmiger Grundfläche auf, welcher beidseitig in Bezug auf die Bewegungsrichtung der Trägereinrichtung 12a bzw. des Doppelpfeils 71 zusätzlich jeweils einen rinnenförmigen Überlaufbehälter 73, 74 für das Material 2 bzw. das Pulver aufweist. Die beiden Überlaufbereiche 73, 74 erstrecken sich dabei zumindest über die gesamte, senkrecht zur Bewegungsrichtung der Trägereinrichtung 12a angeordnete Erstreckung des Aufbaubehälters 72.

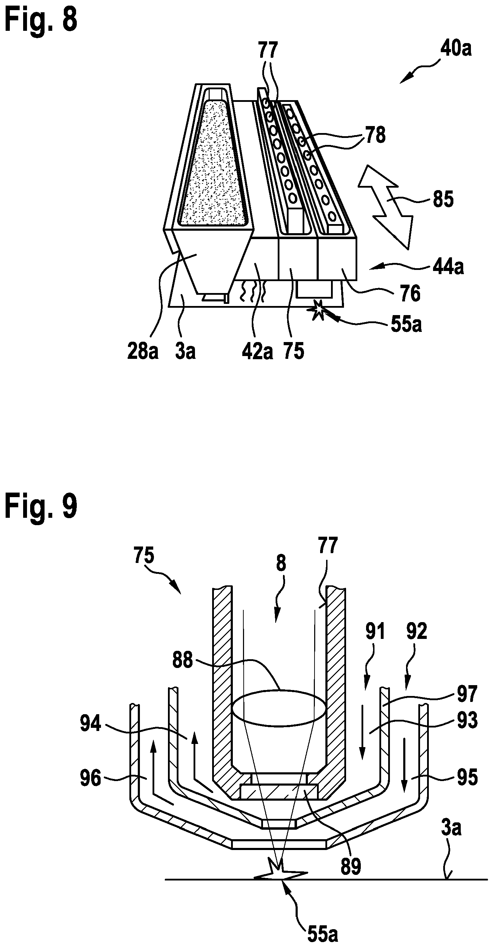

In Überdeckung mit dem Aufbaubehälter 72 ist die Baueinheit 40a angeordnet, welche insgesamt gesehen in Bezug zur Trägereinrichtung 12a starr angeordnet ist. Die Baueinheit 40a weist in Analogie zur Baueinheit 40 eine Strahlerzeugereinheit 44a, eine Heizeinrichtung 42a und einen Pulververteiler 28a auf. Die Strahlerzeugereinheit 44a unterscheidet sich konstruktiv insofern von der Strahlerzeugereinheit 44 der Vorrichtung 10, als dass die Strahlerzeugereinheit 44a, wie insbesondere anhand der Fig. 6 und 8 erkennbar ist, zwei balkenförmige Strahlführungseinheiten 75, 76 aufweist, die jeweils eine Vielzahl von Öffnungen bzw. Bohrungen 77, 78 hat, um jeweils einen Bearbeitungsstrahl 8, 9 zu führen. Die Bearbeitungsstrahlen 8, 9 werden außerhalb der Baueinheit 40a von beispielhaft zwei Laserstrahleinrichtungen 81, 82 erzeugt, die über flexibel ausgebildete optische Leitungen 83, 84 mit den Strahlführungseinheiten 75, 76 bzw. den Bohrungen 77, 78 verbunden sind.

Wesentlich ist darüber hinaus, dass die beiden Strahlführungseinheiten 75, 76, die in Ausrichtung mit den Bohrungen 77, 78 im Bereich des Pulverbetts 3a Bearbeitungsbereiche 55a erzeugen, senkrecht zur Bewegungsrichtung der Trägereinrichtung 12a, d.h. senkrecht zur Richtung des Doppelpfeils 71 in Richtung der Doppelpfeile 85 (Fig. 8) beweglich angeordnet sind, um dadurch die gesamte Oberfläche des Pulverbetts 3a überstreichen bzw. überdecken zu können.

In der Fig. 9 ist ein Ausschnitt aus dem Bereich einer Strahlführungseinheit 75 im Bereich einer Bohrung 77 dargestellt. Insbesondere erkennt man, dass der Bearbeitungsstrahl 8 über eine Fokussierlinse 88 durch ein Schutzglas 89 an der dem Pulverbett 3a zugewandten Stirnseite der Strahlführungseinheit 75 geführt wird und im Bereich des Pulverbetts 3a den Bearbeitungsbereich 55a erzeugt. Weiterhin sind im Bereich der Strahlführungseinheit 75 zwei unterschiedliche Schutzgasführungen 91, 92 erkennbar.

Die erste Schutzgasführung 91 leitet Schutzgas über einen ersten Schutzgaszuführbereich 93 in die unmittelbare Nähe des Schutzglases 89 zu, welches über einen ersten Schutzgasabführbereich 94 wieder abgesaugt wird. Die erste Schutzgasführung 91 dient somit insbesondere dazu, die Oberfläche des Schutzglases 89 zu schützen bzw. von Verunreinigungen freizuhalten.

Demgegenüber wird weiteres Schutzgas über einen zweiten Schutzgaszuführbereich 95 der zweiten Schutzgasführung 92 unmittelbar oberhalb des Bearbeitungsbereichs 55a zugeführt und über einen zweiten Schutzgasabführbereich 96 abgesaugt. Die zweite Schutzgasführung 92 dient insbesondere der Absaugung der unmittelbar im Bearbeitungsbereich 55a entstehenden Gase bzw. Schweißspritzer, Verunreinigungen usw.

Im dargestellten Ausführungsbeispiel sind die beiden Schutzgasausführungen 91, 92 durch ein Zwischenelement 97 voneinander getrennt. Auch ist es denkbar, dass für die beiden Schutzgasführungen 91, 92 unterschiedliche Schutzgase verwendet werden können bzw. das Schutzgas mit unterschiedlichen Drücken bzw. Volumenströmen zugeführt werden kann.

Die soweit beschriebene Vorrichtung 10, 10a kann in vielfältiger Art und Weise abgewandelt bzw. modifiziert werden, im Rahmen der beigefügten Ansprüche.

## Patentansprüche

1. Vorrichtung (10; 10a) zum generativen Herstellen von Werkstücken (1), mit einer Trägereinrichtung (12; 12a), mit wenigstens einem Aufbaubehälter (21 bis 24; 72) für pulverförmiges Material (2), wobei ein Werkstück (1) innerhalb des wenigstens einen Aufbaubehälters (21 bis 24; 72) mittels wenigstens eines Bearbeitungsstrahls (8, 9) durch selektives Aufschmelzen und anschließendes Erstarren einer jeweils obersten Pulverschicht (5) erzeugbar ist, und mit wenigstens einem Pulververteiler (28; 28a) für den wenigstens einen Aufbaubehälter (21 bis 24; 72), wobei der wenigstens eine Aufbaubehälter (21 bis 24; 72) und der wenigstens eine Pulververteiler (28; 28a) zum Einbringen der obersten Pulverschicht (5) höhenverstellbar zueinander angeordnet sind, und dass eine Einrichtung (44; 44a) zur Erzeugung von wenigstens zwei Bearbeitungsstrahlen (8, 9) vorgesehen ist, wobei die wenigstens zwei Bearbeitungsstrahlen (8, 9) beim Erzeugen des Werkstücks (1) einem einzigen Aufbaubehälter (21 bis 24; 72) zugeordnet sind,
**dadurch gekennzeichnet,**
**dass** der Einrichtung (44) zur Erzeugung von wenigstens zwei Bearbeitungsstrahlen (8, 9) eine Schutzgaseinrichtung (58) zugeordnet ist, deren Schutzgaszuführbereich (59) und Schutzgasabführbereich (61) in Bezug zur Bewegungsrichtung des Aufbaubehälters (21 bis 24) vor und hinter Bearbeitungsbereichen (55) der wenigstens zwei Bearbeitungsstrahlen (8, 9) angeordnet sind.

2. Vorrichtung nach Anspruch 1,
**dadurch gekennzeichnet,**
**dass** die Trägereinrichtung (12) in einer senkrechten Achse (11) drehbar gelagert ist, und dass wenigstens zwei Aufbaubehälter (21 bis 24) und wenigstens zwei Pulververteiler (28) sowie für jeden Aufbaubehälter (21 bis 24) eine Einrichtung (44) zur Erzeugung von wenigstens zwei Bearbeitungsstrahlen (8, 9) vorgesehen sind.

3. Vorrichtung nach Anspruch 1,
**dadurch gekennzeichnet,**
**dass** die Trägereinrichtung (12) in einer senkrechten Achse (11) drehbar gelagert ist, dass die Anzahl der Pulververteiler (28) gleich groß ist wie die Anzahl der Aufbaubehälter (21 bis 24), und dass die Pulververteiler (28) und die Aufbaubehälter (21 bis 24) in jeweils gleichgroßen Winkelabständen zueinander um die Achse (11) angeordnet sind.

4. Vorrichtung nach Anspruch 2 oder 3,
**dadurch gekennzeichnet,**
**dass** jeweils ein Pulververteiler (28) und eine Einrichtung (44) zur Erzeugung von wenigstens zwei Bearbeitungsstrahlen (8, 9) eine gemeinsame Baueinheit (40) ausbilden, die gegenüber dem Aufbaubehälter (21 bis 24) in Bezug zur Achse (11) starr angeordnet ist.

5. Vorrichtung nach Anspruch 4,
**dadurch gekennzeichnet,**
**dass** die Baueinheit (40) zusätzlich eine Heizeinrichtung (42) aufweist, die in Bezug zur Bewegungsrichtung eines Aufbaubehälters (21 bis 24) zwischen dem Pulververteiler (28) und der Einrichtung (44) zur Erzeugung von wenigstens zwei Bearbeitungsstrahlen (8, 9) angeordnet ist.

6. Vorrichtung nach einem der Ansprüche 2 bis 5,
**dadurch gekennzeichnet,**
**dass** ein Antrieb (15) zum kontinuierlichen Drehen des bzw. der Aufbaubehälter (21 bis 24) um die Achse (11) vorgesehen ist.

7. Vorrichtung nach einem der Ansprüche 2 bis 5,
**dadurch gekennzeichnet,**
**dass** ein Antrieb (15) zum taktweisen Drehen des bzw. der Aufbaubehälter (21 bis 24) um die Achse (11) vorgesehen ist.

8. Vorrichtung nach einem der Ansprüche 1 bis 7,
**dadurch gekennzeichnet,**
**dass** jedem Bearbeitungsstrahl (8, 9) eine Strahlablenkeinrichtung (53) zur Erzeugung eines Bearbeitungsbereichs (55) der obersten Pulverschicht (5) zugeordnet ist, und dass die Bearbeitungsbereiche (55) entlang wenigstens einer Geraden (63; 63a, 64; 64a; 65 bis 69) angeordnet sind.

9. Vorrichtung nach Anspruch 8,
**dadurch gekennzeichnet,**
**dass** die Anordnung der Bearbeitungsbereiche (55) bzw. Strahlablenkeinrichtungen (53) dem Querschnitt des auszubildenden Werkstücks (1) angepasst ist, und dass die Bearbeitungsbereiche (55) unmittelbar aneinander anschließen oder in teilweiser Überdeckung zueinander angeordnet sind.

10. Vorrichtung nach Anspruch 8 oder 9,
**dadurch gekennzeichnet,**
**dass** beim mehreren Geraden (63; 63a, 64; 64a; 65 bis 69) die Geraden (63; 63a, 64; 64a; 65 bis 69) parallel zueinander angeordnet sind.

11. Vorrichtung nach Anspruch 1,
**dadurch gekennzeichnet,**
**dass** die Trägereinrichtung (12a) und die Einrichtung (44; 44a) zur Erzeugung von wenigstens zwei Bearbeitungsstrahlen (8, 9) linear beweglich zueinander angeordnet sind.

12. Vorrichtung nach Anspruch 11,
**dadurch gekennzeichnet,**
**dass** ein Pulververteiler (28a) und die Einrichtung (44a) zur Erzeugung von wenigstens zwei Bearbeitungsstrahlen (8, 9) zusammen mit einer Heizeinrichtung (42a) eine gemeinsame Baueinheit (40a) ausbilden, wobei die Heizeinrichtung (42a) in Bezug zur Bewegungsrichtung der Baueinheit (40a) zwischen dem Pulververteiler (28a) und der Einrichtung (44a) zur Erzeugung von wenigstens zwei Bearbeitungsstrahlen (8, 9) angeordnet ist.

13. Vorrichtung nach Anspruch 11 oder 12,
**dadurch gekennzeichnet,**
**dass** die Einrichtung (44a) zur Erzeugung von wenigstens zwei Bearbeitungsstrahlen (8, 9) wenigstens zwei Bearbeitungsbereiche (55a) für die Bearbeitungsstrahlen (8, 9) im Bereich des Aufbaubehälters (72) ausbildet, und dass die wenigstens zwei Bearbeitungsbereiche (55a) in bzw. entgegen der Bewegungsrichtung der Baueinheit (40a) angeordnet sind.

14. Vorrichtung nach Anspruch 13,
**dadurch gekennzeichnet,**
**dass** die Einrichtung (44a) zur Erzeugung von wenigstens zwei Bearbeitungsstrahlen (8, 9) zusätzlich senkrecht zur Bewegungsrichtung der Baueinheit (40a) beweglich angeordnet ist.

## Claims

1. Apparatus (10; 10a) for the generative manufacturing of workpieces (1), comprising a carrier device (12; 12a), comprising at least one building-up container (21 to 24; 72) for powdered material (2), wherein a workpiece (1) can be produced within the at least one building-up container (21 to 24; 72) by means of at least one processing beam (8, 9) by selective melting and subsequent hardening of a respectively uppermost powder layer (5), and comprising at least one powder spreader (28; 28a) for the at least one building-up container (21 to 24; 72), wherein the at least one building-up container (21 to 24; 72) and the at least one powder spreader (28; 28a) are arranged adjustably in height in relation to one another for introducing the uppermost powder layer (5), and in that a device (44; 44a) for producing at least two processing beams (8, 9) is provided, wherein the at least two processing beams (8, 9) are assigned to a single building-up container (21 to 24; 72) during the production of the workpiece (1),
**characterized**
**in that** the device (44) for producing at least two processing beams (8, 9) is assigned a shielding gas device (55), the shielding-gas feeding region (59) and shielding-gas discharging region (61) of which are arranged upstream and downstream of processing regions (55) of the at least two processing beams (8, 9) with respect to the direction of movement of the building-up container (21 to 24).

2. Apparatus according to Claim 1,
**characterized**
**in that** the carrier device (12) is mounted rotatably in a vertical axis (11), and in that at least two building-up containers (21 to 24) and at least two powder spreaders (28) are provided, as well as a device (44) for producing at least two processing beams (8, 9) for each building-up container (21 to 24) .

3. Apparatus according to Claim 1,
**characterized**
**in that** the carrier device (12) is mounted rotatably in a vertical axis (11), in that the number of powder spreaders (28) is the same as the number of building-up containers (21 to 24), and in that the powder spreaders (28) and the building-up containers (21 to 24) are arranged around the axis (11) at equal angular distances from one another in each case.

4. Apparatus according to Claim 2 or 3,
**characterized**
**in that** in each case a powder spreader (28) and a device (44) for producing at least two processing beams (8, 9) form a common structural unit (40), which is arranged rigidly in relation to the building-up container (21 to 24) with respect to the axis (11).

5. Apparatus according to Claim 4,
**characterized**
**in that** the structural unit (40) additionally has a heating device (42), which is arranged between the powder spreader (28) and the device (44) for producing at least two processing beams (8, 9) with respect to the direction of movement of a building-up container (21 to 24).

6. Apparatus according to one of Claims 2 to 5,
**characterized**
**in that** a drive (15) is provided for rotating the building-up container or containers (21 to 24) continuously about the axis (11).

7. Apparatus according to one of Claims 2 to 5,
**characterized**
**in that** a drive (15) is provided for rotating the building-up container or containers (21 to 24) cyclically about the axis (11).

8. Apparatus according to one of Claims 1 to 7,
**characterized**
**in that** each processing beam (8, 9) is assigned a beam-deflecting device (53) for producing a processing region (55) of the uppermost powder layer (5), and in that the processing regions (55) are arranged along at least one straight line (63; 63a, 64; 64a; 65 to 69).

9. Apparatus according to Claim 8,
**characterized**
**in that** the arrangement of the processing regions (55) or beam-deflecting devices (53) is adapted to the cross section of the workpiece (1) to be formed, and in that the processing regions (55) directly adjoin one another or are arranged partially overlapping one another.

10. Apparatus according to Claim 8 or 9,
**characterized**
**in that**, in the case of a number of straight lines (63; 63a, 64; 64a; 65 to 69), the straight lines (63; 63a, 64; 64a; 65 to 69) are arranged parallel to one another.

11. Apparatus according to Claim 1,
**characterized**
**in that** the carrier device (12a) and the device (44; 44a) for producing at least two processing beams (8, 9) are arranged linearly movably in relation to one another.

12. Apparatus according to Claim 11,
**characterized**
**in that** a powder spreader (28a) and the device (44a) for producing at least two processing beams (8, 9) together with a heating device (42a) form a common structural unit (40a), wherein the heating device (42a) is arranged between the powder spreader (28a) and the device (44a) for producing at least two processing beams (8, 9) with respect to the direction of movement of the structural unit (40a).

13. Apparatus according to Claim 11 or 12,
**characterized**
**in that** the device (44a) for producing at least two processing beams (8, 9) forms at least two processing regions (55a) for the processing beams (8, 9) in the region of the building-up container (72), and in that the at least two processing regions (55a) are arranged in or counter to the direction of movement of the structural unit (40a).

14. Apparatus according to Claim 13,
**characterized**
**in that** the device (44a) for producing at least two processing beams (8, 9) is additionally arranged movably perpendicular to the direction of movement of the structural unit (40a).

## Revendications

1. Dispositif (10; 10a) pour la fabrication générative de pièces à usiner (1), avec un dispositif de support (12; 12a), avec au moins un réservoir de construction (21 à 24; 72) pour un matériau pulvérulent (2), dans lequel une pièce à usiner (1) peut être produite à l'intérieur dudit au moins un réservoir de construction (21 à 24; 72) au moyen d'au moins un jet de traitement (8, 9) par fusion sélective suivie de solidification d'une couche de poudre respectivement supérieure (5), et avec au moins un distributeur de poudre (28; 28a) pour ledit au moins un réservoir de construction (21 à 24; 72), dans lequel ledit au moins un réservoir de construction (21 à 24; 72) et ledit au moins un distributeur de poudre (28; 28a) sont disposés de façon réglable en hauteur l'un par rapport à l'autre pour l'introduction de la couche de poudre supérieure (5), et en ce que il est prévu un dispositif (44; 44a) pour la production d'au moins deux jets de traitement (8, 9), dans lequel lesdits au moins deux jets de traitement (8, 9) sont associés à un seul réservoir de construction (21 à 24; 72) lors de la production de la pièce à usiner (1),
**caractérisé en ce qu'**un dispositif de gaz de protection (58) est associé au dispositif (44) pour la production d'au moins deux jets de traitement (8, 9), dont la zone d'amenée de gaz de protection (59) et la zone d'évacuation de gaz de protection (61) sont disposées par rapport à la direction de mouvement du réservoir de construction (21 à 24; 72) avant et après des zones de traitement (55) desdits au moins deux jets de traitement (8, 9).

2. Dispositif selon la revendication 1, **caractérisé en ce que** le dispositif de support (12) est monté de façon rotative sur un axe vertical (11), et **en ce qu'**il est prévu au moins deux réservoirs de construction (21 à 24) et au moins deux distributeurs de poudre (28) ainsi que pour chaque réservoir de construction (21 à 24) un dispositif (44) pour la production d'au moins deux jets de traitement (8, 9).

3. Dispositif selon la revendication 1, **caractérisé en ce que** le dispositif de support (12) est monté de façon rotative sur un axe vertical (11), **en ce que** le nombre des distributeurs de poudre (28) est égal au nombre des réservoirs de construction (21 à 24), et **en ce que** les distributeurs de poudre (28) et les réservoirs de construction (21 à 24) sont disposés à des distances angulaires respectivement égales l'un de l'autre autour de l'axe (11).

4. Dispositif selon une revendication 2 ou 3, **caractérisé en ce que** chaque fois un distributeur de poudre (28) et un dispositif (44) pour la production d'au moins deux jets de traitement (8, 9) forment une unité de construction commune (40), qui est disposée de façon rigide par rapport au réservoir de construction (21 à 24) par rapport à l'axe (11).

5. Dispositif selon la revendication 4, **caractérisé en ce que** l'unité de construction (40) présente en outre un dispositif de chauffage (42), qui est disposé par rapport à la direction de mouvement d'un réservoir de construction (21 à 24) entre le distributeur de poudre (28) et le dispositif (44) pour la production d'au moins deux jets de traitement (8, 9).

6. Dispositif selon l'une quelconque des revendications 2 à 5, **caractérisé en ce qu'**il est prévu un entraînement (15) pour la rotation continue du ou des réservoir(s) de construction (21 à 24) autour de l'axe (11) .

7. Dispositif selon l'une quelconque des revendications 2 à 5, **caractérisé en ce qu'**il est prévu un entraînement (15) pour la rotation cadencée du ou des réservoir(s) de construction (21 à 24) autour de l'axe (11) .

8. Dispositif selon l'une quelconque des revendications 1 à 7, **caractérisé en ce qu'**à chaque jet de traitement (8, 9) est associé un dispositif de déviation de jet (53) pour la production d'une zone de traitement (55) de la couche de poudre supérieure (5), et **en ce que** les zones de traitement (55) sont disposées le long d'au moins une droite (63; 63a, 64; 64a; 65 à 69) .

9. Dispositif selon la revendication 8, **caractérisé en ce que** la disposition des zones de traitement (55) ou des dispositifs de déviation de jet (53) est adaptée à la section transversale de la pièce à usiner à fabriquer (1), et **en ce que** les zones de traitement (55) se raccordent directement l'une à l'autre ou sont disposées en recouvrement partiel l'une avec l'autre.

10. Dispositif selon une revendication 8 ou 9, **caractérisé en ce que** dans le cas de plusieurs droites (63; 63a, 64; 64a; 65 à 69) les droites (63; 63a, 64; 64a; 65 à 69) sont disposées parallèlement l'une à l'autre.

11. Dispositif selon la revendication 1, **caractérisé en ce que** le dispositif de support (12a) et le dispositif (44; 44a) pour la production d'au moins deux jets de traitement (8, 9) sont disposés de façon mobile linéairement l'un par rapport à l'autre.

12. Dispositif selon la revendication 11, **caractérisé en ce qu'**un distributeur de poudre (28a) et le dispositif (44a) pour la production d'au moins deux jets de traitement (8, 9) forment en commun avec un dispositif de chauffage (42a) une unité de construction commune (40a), dans lequel le dispositif de chauffage (42a) est disposé par rapport à la direction de mouvement de l'unité de construction (40a) entre le distributeur de poudre (28a) et le dispositif (44a) pour la production d'au moins deux jets de traitement (8, 9).

13. Dispositif selon une revendication 11 ou 12, **caractérisé en ce que** le dispositif (44a) pour la production d'au moins deux jets de traitement (8, 9) forme au moins deux zones de traitement (55a) pour les jets de traitement (8, 9) dans la région du réservoir de construction (72), et **en ce que** lesdites au moins deux zones de traitement (55a) sont disposées suivant ou à l'inverse de la direction de mouvement de l'unité de construction (40a).

14. Dispositif selon la revendication 13, **caractérisé en ce que** le dispositif (44a) pour la production d'au moins deux jets de traitement (8, 9) est en outre disposé de façon mobile perpendiculairement à la direction de mouvement de l'unité de construction (40a).
